# EUROPEAN PATENT APPLICATION

(11) **EP 2 966 554 A1**
(43) Date of publication of application: **13.01.2016**
(21) Application number: 13877004.5
(22) Date of filing: 07.03.2013
(51) Int. Cl.: G06F 3/048

(54) **TERMINAL AND TERMINAL OPERATING METHOD**

(71) Applicant: Dongguan Yulong Telecommunication Tech Co. Ltd., Guangdong 523808 (CN); Yulong Computer Telecommunication Scientific (Shenzhen) Co. Ltd., Shenzhen, Guangdong 518057 (CN)
(72) Inventor: GUO, Deying, Shenzhen Guangdong 518057 (CN); LI, Jun, Shenzhen Guangdong 518057 (CN); MA, Yiwei, Shenzhen Guangdong 518057 (CN); ZHU, Fanghao, Shenzhen Guangdong 518057 (CN); LI, Weiqiang, Shenzhen Guangdong 518057 (CN); YUAN, Wu, Shenzhen Guangdong 518057 (CN)
(74) Representative: Detken, Andreas
(86) International application number: PCT/CN2013/072323
(87) International publication number: WO 2014/134817

(57) **Abstract**

The present invention provides a terminal, which comprises: a display unit used for displaying at least one identifier on a screen of the terminal, wherein the identifier floats on any display interface of the screen; and a command receiving unit used for receiving an activation command oriented at the identifier; wherein, when the identifier is activated, the display unit displays a corresponding functional menu region that comprises at least one functional key on the screen in a floating way, and the functional key is used for executing a corresponding operation function. The present invention also provides a terminal operating method. A technical scheme of the present invention can make a user free from an original key position on a terminal interface, and be able to operate and control the terminal using a more flexible method, improving operation efficiency of the user, and improving user experience.

## Description

### FIELD

The present disclosure relates to the technical field for manipulating a terminal, and in particular to a terminal and a method for manipulating a terminal.

### BACKGROUND

Since different applications have different design styles for UIs, the user needs to consume some time to search for a required function key on a current application interface. Particularly, in a case that a menu required by the user is a second-level menu or a third-level menu which is not displayed in a current interface, the defect of the solutions of the conventional technology is obvious.

In addition, a position of a key menu is pre-designed and fixed by the application developer. Thus, if these key menus are arranged at a position hard to be operated by fingers of the user, for example at the top of the screen, operation efficiency and experience of the user may be reduced.

Hence, a new technical solution is required, by which a user may manipulate the terminal in a flexible way, without the limitation of an initial key position on the terminal interface, thereby improving user experience and operation efficiency of the user.

### SUMMARY

In view of at least one of the above problems, a new technical solution is provided according to the present disclosure, by which the user can manipulate a terminal flexibly without the limitation of an initial key position on the terminal interface, thereby improving user experience and operation efficiency of the user.

In view of the above, a terminal is provided according to the present disclosure, which includes: a display unit configured to display at least one identifier on a screen of the terminal, where the identifier is floated on all display interfaces of the screen; and a command receiving unit configured to receive an activation command for the identifier, where the display unit is further configured to display a function menu region including at least one function key on the screen in a floating way when the identifier is activated, and the function key is configured to perform a corresponding operation function. In the technical solution, the identifier is displayed at any display interface on the screen of the terminal in the floating way. In this way, the user may manipulate a current display interface or the terminal by the identifier in any case. The function key is provided in the function menu region. Thus, no matter which interface is displayed currently, some operation functions irrelevant to the interface (for example shutdown, screen lock, and returning to home page) can be achieved conveniently. No matter which interface is displayed currently, the operation function of any key in the current interface can be achieved conveniently by the function key in the function menu region, and it is not necessary for the user to search for a position of the key on the interface. In the case that the key is arranged at a position difficult to be operated in the interface, for example on the top of the interface, the user does not need to click the key with an effort, thereby improving operation efficiency of the user, reducing operation difficulty of the user, and improving operation experience of the user.

In the above technical solution, preferably, the function key may include at least one fixed function key and/or at least one dynamic function key, where the fixed function key is a system function key, and the dynamic function key is a key associated with a display interface where the identifier is located and/or a key with a use frequency higher than a preset frequency threshold. In the technical solution, the fixed function key is a system function key which may be operated no matter which interface is displayed currently and is irrelevant to the current interface, for example shutdown, screen lock and returning to home page. The dynamic function key is a key relevant to the current interface, which may be a key displayed on the current interface originally. The dynamic function key is configured to achieve an operation function of a key on the interface. For example, if an interface of an application "message" is displayed currently, the dynamic function key may include a key of "inbox" corresponding to a function of "entering an inbox", a key of "draft" corresponding to a function of "entering a draft" and a key of "compose" corresponding to a function of "editing a new short message". The dynamic function key may correspond to other applications or application functions, which are relevant to an application corresponding to the current interface. For example, if the interface of the application "message" is displayed currently, the dynamic function key may include a key of "address book" corresponding to a function of "opening an address book" and a key of "dial" corresponding to a function of "enabling a dial". The above implementing ways each are associated with the current interface. In fact, on some operation interfaces, a menu bar may include multi-level menu options, thereby resulting in a complicated operation when the user uses some common options. In this case, these menu options which may be located at a first-level menu, a second-level menu or other menus are displayed in the function menu region as dynamic function keys. In addition, frequencies of all or some function keys on the interface may be recorded, and the key with a high frequency is set as the dynamic function key. Specifically, a key with the highest frequency in one interface is set as the dynamic function key. In addition, a manufacturer or a user may add, delete or change the function keys in the function menu region based on an actual operation.

In the above technical solution, preferably, the terminal may further include: a relation setting unit configured to preset an association between at least one interface of the terminal and the dynamic function key; and a key configuration unit configured to acquire, based on a display interface where the identifier is currently located, a function key associated with the display interface, and configure the acquired function key in the function menu region. In the technical solution, the association between the interface and the dynamic function key is preset, and thus the function keys in the function menu region may be changed dynamically based on the interface where the identifier is currently located. Therefore, the configuration of the function key conforms to an operation intension and an operation habit of the user more. In the case that multiple display interfaces are displayed on the screen in a split-screen way, based on one split-screen displayed interface where the identifier is currently located, a function key associated with the split-screen displayed interface is acquired, and the acquired function key is configured in the function menu region.

In the above technical solution, preferably, the relation setting unit may be configured to preset an association between at least one region in at least one interface and the dynamic function key; and the key configuration unit may be configured to acquire, based on a display region of a display interface where the identifier is currently located, a function key associated with the display region, and configure the acquired function key in the function menu region. In the technical solution, a respective interface may be divided into multiple regions. In this way, when the identifier is located at different regions of the same interface, function keys in the function menu region are different, which is thereby convenient for the user to operate.

In the above technical solution, preferably, the function menu region may include at least one page, and each of the at least one page may include at least one of the function keys, where the display unit is configured to switch between different pages to display one of the pages, in response to a switching instruction received by the command receiving unit. In the technical solution, the number of the function keys may exceed the maximum number of the function keys which can be displayed in the function menu region, hence these function keys may be respectively displayed in multiple pages. In this way, the user may achieve more operation functions by the identifier and the function menu region.

In the above technical solution, preferably, the terminal may further include a menu setting unit configured to set a fixed function key and/or a dynamic function key to be displayed in the function menu region, in response to a received setting command. In the technical solution, a manufacturer or the user may set the fixed function key and/or the dynamic function key in the function menu region based on actual cases or requirements, thereby conforming to an actual use requirement.

In the technical solution, preferably, the display unit may be further configured to display a corresponding identifier on each of multiple split-screen displayed interfaces, in a case that the multiple display interfaces are displayed on the screen in a split-screen way; where when the identifier is activated, the dynamic function key included in the displayed function menu region is a key associated with the split-screen displayed interface where the identifier is currently located. In the technical solution, in the case of the multiple split-screen displayed interfaces, and particularly in the case that two or more users perform operations simultaneously, the users have different operation requirements, and hence only one identifier is not enough. Hence, a distinct identifier may be provided for each screen interface. Particularly, in the case of a terminal supporting multiple-touch, multiple users can operate multiple identifiers, thereby manipulating respective split-screen interfaces.

In the above technical solution, preferably, the display unit may be configured to stop displaying the function menu region, in the case that the command receiving unit receives a command for a specified operation of the user or does not receive any operation command in a predetermine time threshold; where the specified operation includes at least one of selecting a specified function key in the function menu region, touching a region other than the function menu region on the screen, and triggering a first physical key on the terminal, or a combination thereof. In the technical solution, the function menu region is displayed on the screen of the terminal in the floating way, and thus a content displayed on the screen may be sheltered. Therefore, the user may stop displaying the function menu region in the above way, when the user does not need to operate on the function menu region. If the identifier is hidden when the function menu region is displayed by activating the identifier, the identifier may be recovered to display when the displaying of the function menu region is stopped. If the identifier is displayed when the function menu region is displayed by activating the identifier, the function menu region may disappear and the identifier is displayed continuously when the function menu region is not displayed.

In the above technical solution, preferably, the identifier may be a translucent icon. In the technical solution, the identifier is set to be translucent. Thus, the interfaces displayed on the screen are not sheltered by the identifier, in the case that the identifier is displayed on the screen in the floating way.

In the above technical solution, preferably, the terminal may further include: an identifier position acquiring unit configured to acquire a first identifier display position of the identifier on the screen; and a first determining unit configured to determine whether an operation key is located at the first identifier display position on the display interface, where the display unit is configured to move the identifier to a second identifier display position without an operation key, in the case that the operation key is located at the first identifier display position. In the technical solution, some operation keys may be located on the display interface to manipulate the current display interface or the terminal. Although the identifier may only occupy a small display area, the identifier may still overlap "spatially" with the operation keys on the display interface. Hence, when the user clicks the region, the terminal can not determine a real operation intension of the user, thereby resulting in a misoperation. Accordingly, it is convenient for the user to operate by automatically changing the display position of the identifier, thereby avoiding a misoperation.

In the above technical solution, preferably, the display unit may be configured to change a display position of the identifier on the screen in a real-time manner in response to a click-and-drag operation instruction for the identifier which is received by the command receiving unit. In the technical solution, the identifier may be small and translucent, which may still interfere with viewing the interface by the user. In this case, the user may place the identifier at the most appropriate position on the screen by clicking and dragging the identifier directly, thereby being convenient for user to use the terminal.

In the above technical solution, preferably, the terminal may further include a property editing unit configured to edit a display property of the identifier in response to a received property editing command. In the technical solution, the display property of the identifier includes a size, a shape, a color, an initial display position, the number and a transparency of the identifiers. One or more of these display properties is edited, to make the identifier conform to a use habit of the user more.

In the above technical solution, preferably, the display unit may be further configured to hide the identifier in the case that the identifier is clicked and dragged to a preset hiding region on the screen. In the technical solution, in the case that the user does not need to operate the identifier or the function menu region but needs to view the display interface of the terminal, for example the user sees a movie on the terminal, the identifier may shelter the current display interface. Particularly, in the case that the screen of the terminal itself is not large, the identifier may interfere with the viewing of the user. Hence, the hiding region is preset on the screen, such that the user may conveniently hide the identifier, instead of setting the identifier by using a "settings" menu.

In the above technical solution, preferably, the hiding region may be located in a boundary region of the screen. In the technical solution, a closed graph is provided on the screen and an edge of the graph is not overlapped with at least one border of the screen. A region other than the closed graph on the screen is the boundary region of the screen. According to habits of the user, the user generally expects to move an undesired object away from a current concerned position. In the case that the user does not expect that the identifier shelters the display interface, the concerned position is the current display interface. Hence, the user is intended to move the identifier from a middle position of the display interface to a border position of the screen, which just likes an action "throwing the identifier outside the screen". Thus, the hiding region provided in the boundary region of the screen is convenient for the user to use.

In the above technical solution, preferably, the display unit may be further configured to redisplay the identifier on the screen in response to an activation operation command which is associated with the hiding region and received by the command receiving unit, where the activation operation command may be triggered by at least one of clicking the hiding region, clicking the hiding region and making a first preset gesture, making a second preset gesture in the hiding region, and triggering a second physical key on the terminal, or a combination thereof. In the technical solution, once the user needs to use the identifier after the identifier is hidden, the identifier may be redisplayed fast in response to the activation operation command, thereby being convenient for the user to manipulate the current operation interface or the terminal by using the identifier. The identifier is activated in response to the activation operation command associated with the hiding region, instead of controlling the display of the identifier by using the "settings" menu, thereby simplifying an operation of the user.

In the above technical solution, preferably, the terminal may further include an icon creating unit configured to create a prompt icon corresponding to the identifier, where the display unit is further configured to display the prompt icon on the screen, where the display unit may redisplay the identifier on the screen when the command receiving unit receives a preset operation command for the prompt icon. In the technical solution, after the identifier is hidden, the prompt icon may be displayed to guide a user to reactivate the identifier. In order to prevent the prompt icon from influencing the viewing of the user, preferably, the prompt icon has a less size than the identifier, and is more transparency than the identifier. The prompt icon may be any graph preset by the manufacturer or specified by the user, for example an arrow and a word. The prompt icon may be a static picture or a dynamic picture. For example, the prompt icon is an arrow displayed in a blinking way, which has an area smaller than the identifier and is more transparency than the identifier.

In the above technical solution, preferably, the display unit may be further configured to display corresponding guidance information in the hiding region or a preset display region on the screen, in response to a preset operation command received by the command receiving unit. The display unit may be configured to redisplay the identifier on the screen when the command receiving unit receives an operation command input by the user based on the guidance information. In the technical solution, an operation of the user may be guided using the guidance information for example words and animations, and thereby invoking the identifier fast using the guidance information. Specifically, the guidance information may include multiple steps which are displayed step by step. When the user completes one step, the next step is displayed until all the steps are completed. For example, the guidance information includes two steps: "clicking" and "dragging".

In the above technical solution, preferably, the prompt icon may be located in the hiding region or a preset region on the screen. In the technical solution, since the user hides the identifier by dragging the identifier to the hiding region, the prompt icon is displayed in the hiding region, and thus actions "hiding" and "redisplaying" associate with each other, thereby enhancing continuity of actions, and being convenient for the user to operate. Since the hiding region may relate to multiple borders of the screen and the user drags the identifier in a random direction when hiding the identifier, the prompt icon may be displayed at different positions every time the prompt icon is displayed, thereby resulting in a confusion of the display interface in a certain case. Therefore, a certain region may be preset on the screen to display the prompt icon, no matter where the identifier is dragged in the hiding region, thereby ensuring consistency of interface displaying. It should be noted that, the preset region may be located at a certain fixed position inside or outside the hiding region, and the number of the preset regions is not limited to one. In different displaying cases, for example in a vertical screen mode and a horizontal screen mode, different preset regions may be adopted, which may be set by the user or the dealer based on requirements.

In the above technical solution, preferably, the display unit may be configured to change a display position of the prompt icon on the screen in a real-time manner, in response to a click-and-drag operation instruction for the prompt icon which is received by the command receiving unit. In the technical solution, the prompt icon may be smaller and more transparent than the identifier, which may still interfere with the viewing of the user. Thus, the user may place the prompt icon at the most appropriate position on the screen by clicking and dragging the prompt icon directly, thereby being convenient for the user to use.

In the above technical solution, preferably, the terminal may further include: an icon position acquiring unit configured to acquire a first icon display position of the prompt icon on the screen; and a second determining unit configured to determine whether an operation key is located at the first icon display position on the display interface, where the display unit is configured to move the identifier to a second icon display position without the operation key, in the case that the operation key is located at the first icon display position. In the technical solution, some operation keys are provided on the display interface, to manipulate the current display interface or the terminal. In addition, the prompt icon may be smaller than the identifier, but the prompt icon may be still overlapped "spatially" with the operation keys on the display interface. In this case, when the user clicks the region, the terminal can not determine a real operation intension of the user, thereby resulting in a misoperation. Hence, it is convenient for the user to operate by changing a display position of the prompt icon automatically, thereby avoiding a misoperation.

According to another aspect of the present disclosure, a method for manipulating a terminal is further provided, which includes: displaying at least one identifier on a screen of the terminal, where the identifier is floated on all display interfaces of the screen; and displaying a function menu region including at least one function key on the screen in a floating way when the identifier is activated, where the function key is configured to perform a corresponding operation function. In the technical solution, the identifier is displayed on any display interface on the screen of the terminal in the floating way. In this way, the user may manipulate the current display interface or the terminal by using the identifier in any case. A function key is provided in the function menu region. Thus, no matter which interface is displayed currently, some operation functions irrelevant to the interface (for example, shutdown, screen lock, and returning to a home page) can be achieved conveniently. No matter which interface is displayed currently, the operation function of any key in the current interface can be achieved conveniently by using the function key in the function menu region, and it is not necessary for the user to search for a position of the key on the interface. In the case that the key is arranged at a position difficult to be operated in the interface, for example on the top of the interface, the user do not need to click the key with an effort, thereby improving operation efficiency of the user, reducing operation difficulty of the user, and improving operation experience of the user.

In the above technical solution, preferably, the function key may include at least one fixed function key and/or at least one dynamic function key, where the fixed functional key is a system function key, and the dynamic function key is a key associated with a display interface where the identifier is located and/or a key with a use frequency higher than a preset frequency threshold. In the technical solution, the fixed function key is a system function key which may be operated no matter which interface is displayed currently and is irrelevant to the current interface, for example shutdown, screen lock, and returning to a home page. The dynamic function key is a key relevant to the current interface, which may be a key displayed on the current interface originally. The dynamic function key is configured to achieve an operation function of a key on the interface. For example, if an interface of an application "message" is displayed currently, the dynamic function key may include keys of "inbox" corresponding to a function of "entering an inbox", a key of "draft" corresponding to a function of "entering a draft", and a key of "compose" corresponding to a function of "editing a new short message". The dynamic function key may also correspond to other applications or application functions, which are relevant to an application corresponding to the current interface. For example, if the interface of the application "message" is displayed currently, the dynamic function key may include a key of "address book" corresponding to a function of "opening an address book" and a key of "dial" corresponding to a function of "enabling a dial". The above implementing ways each are associated with the current interface. In fact, on some operation interfaces, a menu bar may include multi-level menu options, thereby resulting in a complicated operation when the user uses some common options. In this case, these menu options which may be located at a first-level menu, a second-level menu or other menus may be displayed in the function menu region as dynamic function keys. In addition, frequencies of all or some function keys on the interface may be recorded, and the key with the highest frequency is set as the dynamic function key. Specifically, a key with the highest frequency in one interface is set as the dynamic function key. In addition, a manufacturer or a user may add, delete or change the function keys in the function menu region based on an actual operation.

In the above technical solution, preferably, an association between at least one interface of the terminal and the dynamic function key may be preset; and based on a display interface where the identifier is currently located, a function key associated with the display interface may be acquired, and the acquired function key may be configured in the function menu region. In the technical solution, the association between the interface and the dynamic function key is preset, and thus the function keys in the function menu region may be changed dynamically based on the interface where the identifier is currently located. Therefore, the configuration of the function key conforms to an operation intension and an operation habit of the user more. In the case that multiple display interfaces are displayed on the screen in a split-screen way, based on one split-screen displayed interface where the identifier is currently located, a function key associated with the split-screen displayed interface is acquired, and the acquired function key is configured in the function menu region.

In the above technical solution, preferably, an association between at least one region in at least interface and the dynamic function key may be preset; and based on a display region of a display interface where the identifier is currently located, a function key associated with the display region may be acquired, and the acquired function key is configured in the function menu region. In the technical solution, a respective interface may be divided in multiple regions. In this way, when the identifier is located at different regions of the same interface, function keys in the function menu region are different, which is thereby convenient for the user to operate.

In the above technical solution, preferably, the function menu region may include at least one page, and each of the at least one page may include at least one of the function keys; and a different page may be switched to be displayed in response to a received switching instruction. In the technical solution, the number of function keys may exceed the maximum number of function keys which can be displayed in the function menu region, hence these function keys may be respectively displayed in multiple pages. In this way, the user can achieve more operation functions by the identifier and the function menu region.

In the above technical solution, preferably, the method may further include: setting a fixed function key and/or a dynamic function key to be displayed in the function menu region, in response to the received setting instruction. In the technical solution, the manufacture or the user may set the fixed function key and/or the dynamic function key in the function menu region based on actual cases or requirements, thereby conforming to the actual use requirement.

In the above technical solution, preferably, the method may further include: displaying a corresponding identifier on each of multiple display interfaces, in a case that the multiple display interfaces are displayed on the screen in a split-screen way, where when the identifier is activated, the dynamic function key included in the displayed function menu region is a key associated with a split-screen displayed interface where the identifier is currently located, when the identifier is activated. In the technical solution, in the case of multiple split-screen displayed interfaces, when two or more users perform operations simultaneously, the users have different operation requirements, and hence only one identifier is not enough. Hence, a distinct identifier may be provided for each screen interface. Particularly, in the case of the terminal supporting multiple-touch, multiple users can operate multiple identifiers, thereby manipulating respective split-screen interfaces.

In the above technical solution, preferably, the method may further include: stopping displaying the function menu region, in the case that the terminal receives a specified operation command of a user or does not receive any operation command within a predetermined time threshold; where the specified operation includes at least one of selecting a specified function key in the function menu region, touching a region other than the function menu region on the screen, and triggering a first physical key on the terminal, or a combination thereof. In the technical solution, the function menu region is displayed on the screen of the terminal in the floating way, and thus a content displayed on the screen may be sheltered. Therefore, the user may stop displaying the function menu region in the above way, when the user does not need to operate the function menu region. If the identifier is hidden when the function menu region is displayed by activating the identifier, the identifier may be recovered to display when the displaying of the function menu region is stopped. If the identifier is displayed when the function menu region is displayed by activating the identifier, the function menu region may disappear and the identifier is displayed continuously when the displaying of the function menu region is stopped.

In the above technical solution, preferably, the identifier may be a translucent icon. In the technical solution, the identifier is set to be translucent. Thus, the interfaces displayed on the screen are not sheltered by the identifier, in the case that the identifier is displayed on the screen in the floating way.

In the above technical solution, preferably, the method may further include: acquiring a first identifier display position of the identifier on the screen; determining whether an operation key is located at the first identifier display position on the display interface; and moving the identifier to a second identifier display position without an operation key, in the case that the operation key is located at the first identifier display position. In the technical solution, some operation keys may be located on the display interface to manipulate the current display interface or the terminal. Although the identifier may only occupy a small display area, the identifier may be still overlapped "spatially" with the operation keys on the display interface. Hence, when the user clicks the region, the terminal can not determine a real operation intension of the user, thereby resulting in a misoperation. Accordingly, it is convenient for the user to operate by automatically changing the display position of the identifier, thereby avoiding a misoperation.

In the above technical solution, preferably, the method may further include: changing a display position of the identifier on the screen in a real-time manner in response to a received click-and-drag operation instruction for the identifier. In the technical solution, although the identifier may be small and translucent, which may still interfere with viewing the interface by the user, hence the user may place the identifier at the most appropriate position on the screen by clicking and dragging the identifier directly, thereby being convenient for the user to use the terminal.

In the above technical solution, preferably, the method may further include: editing a display property of the identifier in response to a received property editing command. In the technical solution, the display property of the identifier includes a size, a shape, a color, an initial display position, the number and a transparency of the identifiers. One or more of these display properties are edited, to make the identifier conform to a use habit of the user more.

In the above technical solution, preferably, the method may further include: hiding the identifier in the case that the identifier is clicked and dragged to a preset hiding region on the screen. In the technical solution, in the case that the user does not need to operate the identifier or the function menu region but needs to view the display interface of the terminal, for example the user sees a movie on the terminal, the identifier may shelter the current display page. Particularly, in the case that the screen of the terminal itself is not large, the identifier may interfere with the viewing of the user. Hence, the hiding region is preset on the screen, such that the user may hide the identifier conveniently, instead of setting the identifier by a "settings" menu.

In the above technical solution, preferably, the hiding region may be located in a boundary region of the screen. In the technical solution, a closed graph is provided on the screen, and an edge of the graph is not overlapped with at least one border of the screen. A region other than the closed graph on the screen is the boundary region of the screen. According to habits of the user, the user generally expects to move an undesired object away from a current concerned position. In the case that the user does not expect that the identifier shelters the display interface, the concerned position is the current display interface. Hence, the user is intended to move the identifier from a middle position of the display interface to a border position of the screen, which just likes an action "throwing the identifier outside the screen". Thus, the hiding region provided in the boundary region of the screen is convenient for the user to use.

In the above technical solution, preferably, after the hiding the identifier, the method may further include: redisplaying the identifier on the screen when the terminal receives an activation operation command associated with the hiding region, where the activation operation command may be triggered by at least one of clicking the hiding region, clicking the hiding region and making a first preset gesture, making a second preset gesture in the hiding region, and triggering a second physical key on the terminal, or a combination thereof. In the technical solution, once the user needs to use the identifier after the identifier is hidden, the identifier may be redisplayed fast in response to the activation operation command, thereby being convenient for user to manipulate the current operation interface or the terminal by using the identifier. The identifier is activated in response to the activation operation command associated with the hiding region, instead of controlling the display of the identifier by using a "settings" menu, thereby simplifying the operation of the user.

In the above technical solution, preferably, after the hiding the identifier, the method may further include: creating a prompt icon corresponding to the identifier, and displaying the prompt icon on the screen; and redisplaying the identifier on the screen when the terminal receives a preset operation command for the prompt icon. In the technical solution, after the identifier is hidden, the prompt icon may be displayed to guide the user to reactivate the identifier. In order to prevent the prompt icon from influencing the viewing of the user, preferably, the prompt icon has a less size than the identifier, and is more transparency than the identifier. The prompt icon may be any graph preset by the manufacturer or specified by the user, for example an arrow and a word. The prompt icon may be a static picture or a dynamic picture. For example, the prompt icon is an arrow displayed in a blinking way, which has an area smaller than the identifier and is more transparency than the identifier.

In the above technical solution, preferably, the method may further include: displaying corresponding guidance information in the hiding region or a preset display region on the screen when the terminal receives the preset operation command; and redisplaying the identifier on the screen when the terminal receives an operation command input by the user based on the guidance information. In the technical solution, an operation of the user may be guided using the guidance information, for example a word and an animation, thereby invoking the identifier fast using the guidance information. Specifically, the guidance information may include multiple steps which are displayed step by step. When the user completes one step, the next step is displayed until all the steps are completed. For example, the guidance information includes two steps: "clicking" and "dragging".

In the above technical solution, preferably, the prompt icon may be located in the hiding region or a preset region on the screen. In the technical solution, since the user hides the identifier by dragging the identifier to the hiding region, the prompt icon is displayed in the hiding region, and thus actions "hiding" and "redisplaying" associate with each other, thereby enhancing continuity of actions, and being convenient for the user to operate. Since the hiding region may relate to multiple borders of the screen and the user drags the identifier in a random direction when hiding the identifier, the prompt icon may be displayed at different positions every time the prompt icon is displayed, thereby resulting in a confusion of the display interface in a certain case. Therefore, a certain region may be preset on the screen, to display the prompt icon, no matter which hiding region the identifier is dragged in, thereby ensuring consistency of interface displaying. It should be noted that, the preset region may be located at a certain fixed position inside or outside the hiding region, and the number of the preset regions is not limited to one. In different displaying cases, for example in a vertical screen mode and a horizontal screen mode, different preset regions may be adopted, which may be set by the user or the dealer based on requirements.

In the above technical solution, preferably, the method may further include: changing a display position of the prompt icon on the screen in a real-time manner in response to a received click-and-drag operation instruction for the prompt icon. In the technical solution, the prompt icon may be smaller and more transparent than the identifier, which may still interfere with the viewing of the user. Thus, the user may place the prompt icon at the most appropriate position on the screen by clicking and dragging the prompt icon directly, thereby being convenient for the user to use the terminal.

In the above technical solution, preferably, the method may further include: acquiring a first icon display position of the prompt icon on the screen; determining whether an operation key is provided at the first icon display position on the display interface of the screen; and moving the prompt icon to a second icon display position without the operation key, in the case that the operation key is provided at the first icon display position. In the technical solution, some operation keys are provided at the display interface, to manipulate the current display interface or the terminal. In addition, the prompt icon is smaller than the identifier, but the prompt icon may be still overlapped "spatially" with the operation keys on the display interface. In this case, when the user clicks the region, the terminal can not determine a real operation intension of the user, thereby resulting in a misoperation. Hence, it is convenient to for the user operate by changing a display position of the prompt icon automatically, thereby avoiding a misoperation.

With the above technical solution, the user can manipulate the terminal flexibly without the limitation of an initial key position on the terminal interface, thereby improving operation efficiency of the user and improving user experience.

### BRIEF DESCRIPTION OF THE DRAWINGS

Figure 1 shows a block diagram of a terminal according to an embodiment of the present disclosure;
Figure 2 shows a flowchart of a method for manipulating a terminal according to an embodiment of the present disclosure; and
Figure 3A to Figure 3K show schematic diagrams of an interface for manipulating a terminal according to an embodiment of the present disclosure.

### DETAILED DESCRIPTION OF EMBODIMENTS

In order to understand the objects, features and advantages described above of the present disclosure more clearly, hereinafter the present disclosure is further described in detail in conjunction with the drawings and specific implementing ways. It should be noted that, embodiments of the present disclosure and features in the embodiments may be combined each other without a conflict.

In order to sufficiently understand the present disclosure, many specific details are clarified in the following description. However, the present disclosure may be implemented using other ways different from the ways described here. Hence, the scope of protection of the present disclosure is not limited to specific embodiments disclosed hereinafter.

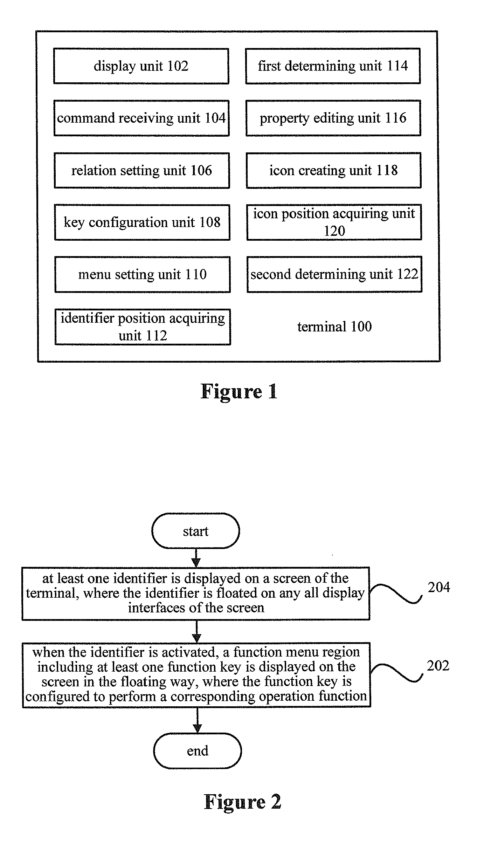

Figure 1 shows a block diagram of a terminal according to an embodiment of the present disclosure.

As shown in Figure 1, a terminal 100 according to the embodiment of the present disclosure includes: a display unit 102 configured to display at least one identifier on a screen of the terminal 100, where the identifier is floated on any display interface of the screen; and a command receiving unit 104 configured to receive an activation command for the identifier. The display unit 102 is further configured to display a function menu region including at least one function key on the screen in a floating way when the identifier is activated, and the function key is configured to perform a corresponding operation function. In the technical solution, the identifier is displayed at any display interface on the screen of the terminal 100 in the floating way. In this way, a user may manipulate a current display interface or the terminal 100 by the identifier in any case. The function key is provided in the function menu region. Thus, no matter which interface is displayed currently, some operation functions irrelevant to the interface (for example, shutdown, screen lock, and returning to home page) can be achieved conveniently. No matter which interface is displayed currently, the operation function of any key in the current interface can be achieved conveniently by the function key in the function menu region, and it is not necessary for the user to search for a position of the key on the interface. In the case that the key is arranged at a position difficult to be operated in the interface, for example on the top of the interface, the user does not need to click the key with an effort, thereby improving operation efficiency of the user, reducing operation difficulty of the user, and improving operation experience of the user.

In the above technical solution, preferably, the function key includes at least one fixed function key and/or at least one dynamic function key. The fixed function key is a system function key, and the dynamic function key is a key associated with a display interface where the identifier is located and/or a key with a use frequency higher than a preset frequency threshold. In the technical solution, the fixed function key is a system function key which may be operated no matter which interface is displayed currently and is irrelevant to the current interface, for example shutdown, screen lock, and returning to home page. The dynamic function key is a key relevant to the current interface, which may be a key displayed on the current interface originally. The dynamic function key is configured to achieve an operation function of a key on the interface. For example, if an interface of an application "message" is displayed currently, the dynamic function key may include a key of "inbox" corresponding to a function of "entering an inbox", a key of "draft" corresponding to a function of "entering a draft" and a key of "compose" corresponding to a function of "editing a new short message". The dynamic function key may correspond to other applications or application functions, which are relevant to an application corresponding to the current interface. For example, if the interface of the application "message" is displayed currently, the dynamic function key may include a key of "address book" corresponding to a function of "opening an address book" and a key of "dial" corresponding to a function of "enabling a dial". The above implementing ways each are associated with the current interface. In fact, on some operation interfaces, a menu bar may include multi-level menu options, thereby resulting in a complicated operation when the user uses some common options. In this case, these menu options which may be located at a first-level menu, a second-level menu or other menus are displayed in the function menu region as dynamic function keys. In addition, frequencies of all or some function keys on the interface may be recorded, and the key with a high frequency is set as the dynamic function key. Specifically, a key with the highest frequency in one interface is set as the dynamic function key. In addition, a manufacturer or a user may add, delete or change the function keys in the function menu region based on an actual operation.

In the above technical solution, preferably, the terminal further includes: a relation setting unit 106 configured to set an association between at least one interface of the terminal 100 and the dynamic function key; and a key configuration unit 108 configured to acquire, based on a display interface where the identifier is currently located, a function key associated with the display interface, and configure the acquired function key in the function menu region. In the technical solution, the association between each interface and the dynamic function key is preset, and thus the function keys in the function menu region may be changed dynamically based on the interface where the identifier is currently located. Therefore, the configuration of the function key conforms to an operation intension and an operation habit of the user more. In the case that multiple display interfaces are displayed on the screen in a split-screen way, based on one split-screen displayed interface where the identifier is currently located, a function key associated with a split-screen displayed interface is acquired, and the acquired function key is configured in the function menu region.

In the above technical solution, preferably, the relation setting unit 106 is configured to preset an association between at least one region in at least one interface and the dynamic function key; and the key configuration unit 108 is configured to acquire, based on a display region of the display region where the identifier is currently located, a function key associated with the display region, and configure the acquired function key in the function menu region. In the technical solution, a respective interface may be divided into multiple regions. In this way, when the identifier is located at different regions of the same interface, function keys in the function menu region are different, which is thereby convenient for the user to operate.

In the above technical solution, preferably, the function menu region includes at least one page, and each of the at least one page includes at least one of the function keys. The display unit 102 is configured to switch between different pages to display one of the pages, in response to a switching instruction received by the command receiving unit 104. In the technical solution, the number of the function keys may exceed the maximum number of the function keys which can be displayed in the function menu region, hence these function keys may be respectively displayed in multiple pages. In this way, the user may achieve more operation functions by the identifier and the function menu region.

In the above technical solution, preferably, the terminal further includes a menu setting unit 110 configured to set a fixed function key and/or dynamic function key to be displayed in the function menu region, in response to a received setting command. In the technical solution, a manufacture or the user may set the fixed function key and/or the dynamic function key in the function menu region based on actual cases or requirements, thereby conforming to the actual use requirement.

In the above technical solution, preferably, the display unit 102 is further configured to display a corresponding identifier on each of multiple split-screen displayed interfaces, in a case that the multiple display interfaces are displayed on the screen in a split-screen way. When the identifier is activated, the dynamic function key included in the displayed function menu region is a key associated with the split-screen displayed interface where the identifier is currently located. In the technical solution, in the case of the multiple split-screen displayed interfaces, and particularly in the case that two or more users perform operations simultaneously, the users have different operation requirements, and hence only one identifier is not enough. Hence, a distinct identifier may be provided for each screen interface. Particularly, in the case of the terminal 100 supporting multiple-touch, multiple users can operate multiple identifiers, thereby manipulating respective split-screen interfaces.

In the above technical solution, preferably, the display unit 102 is configured to stop displaying the function menu region, in the case that the command receiving unit 104 receives a specified operation command of the user or does not receive any operation command in a predetermined time threshold. The specified operation includes at least one of selecting a specified function key in the function menu region, touching a region other than the function menu region on the screen, and triggering a first physical key on the terminal 100, or a combination thereof. In the technical solution, the function menu region is displayed on the screen of the terminal in the floating way, and thus a content displayed on the screen may be sheltered. Therefore, the user may stop displaying the function menu region in the above way, when the user does not need to operate the function menu region. If the identifier is hidden when the function menu region is displayed by activating the identifier, the identifier may be recovered to display when the displaying of the function menu region is stopped. If the identifier is displayed when the function menu region is displayed by activating the identifier, the function menu region may disappear and the identifier is displayed continuously when the function menu region is not displayed.

In the above technical solution, preferably, the identifier is a translucent icon. In the technical solution, the identifier is set to be translucent. Thus, the interfaces displayed on the screen are not sheltered by the identifier, in the case that the identifier is displayed on the screen in the floating way.

In the above technical solution, preferably, the terminal further includes: an identifier position acquiring unit 112 configured to acquire a first identifier display position of the identifier on the screen; and a first determining unit 114 configured to determine whether an operation key is located at the first identifier display position on the display interface, where the display unit 102 moves the identifier to a second identifier display position without the operation key, in the case that the operation key is located at the first identifier display position. In the technical solution, some operation keys may be located on the display interface to manipulate the current display interface or the terminal. Although the identifier may only occupy a small display area, the identifier may still overlap "spatially" with the operation keys on the display interface. Hence, when the user clicks the region, the terminal 100 can not determine a real operation intension of the user, thereby resulting in a misoperation. Accordingly, it is convenient for the user to operate by automatically changing the display position of the identifier, thereby avoiding a misoperation.

In the above technical solution, preferably, the display unit 102 is configured to change a display position of the identifier on the screen in a real-time manner in response to a click-and-drag operation instruction for the identifier which is received by the command receiving unit 104. In the technical solution, the identifier may be small and translucent, which may still interfere with viewing the interface by the user. In this case, the user may place the identifier at the most appropriate position on the screen by clicking and dragging the identifier directly, thereby being convenient for the user to use the terminal.

In the above technical solution, preferably, the terminal further includes a property editing unit 116 configured to edit a display property of the identifier in response to a received property editing command. In the technical solution, the display property of the identifier includes a size, a shape, a color, an initial display position, the number and a transparency of the identifiers. One or more of these display properties is edited, to make the identifier to conform to a use habit of the user more.

In the above technical solution, preferably, the display unit 102 is further configured to hide the identifier in the case that the identifier is clicked and dragged to a preset hiding region of the screen. In the technical solution, in the case that the user does not need to operate the identifier or the function menu region but needs to view the display interface of the terminal 100, for example the user sees a movie on the terminal 100, the identifier may shelter the current display interface. Particularly, in the case that the screen of the terminal 100 itself is not large, the identifier may interfere with the viewing of the user. Hence, the hiding region is preset on the screen, such that the user may conveniently hide the identifier, instead of setting the identifier by using a "settings" menu.

In the above technical solution, preferably, the hiding region is located in a boundary region of the screen. In the technical solution, a closed graph is provided on the screen and an edge of the graph is not overlapped with at least one border of the screen. A region other than the closed graph on the screen is the boundary region of the screen. According to habits of the user, the user generally expects to move an undesired object away from a current concerned position. In the case that the user does not expect that the identifier shelters the display interface, the concerned position is the current display interface. Hence, the user is intended to move the identifier from a middle position of the display interface to a border position of the screen, which just likes an action "throwing the identifier outside the screen". Thus, the hiding region provided in the boundary region of the screen is convenient for the user to use.

In the above technical solution, preferably, the display unit 102 is further configured to redisplay the identifier on the screen in response to an activation operation command which is associated with the hiding region and received by the receiving unit 104. The activation operation command may be triggered by at least one of clicking the hiding region, clicking the hiding region and making a first preset gesture, making a second preset gesture in the hiding region, and triggering a second physical key on the terminal 100, or a combination thereof. In the technical solution, once the user needs to use the identifier after the identifier is hidden, the identifier may be redisplayed fast in response to the activation operation command, thereby being convenient for the user to manipulate the current operation interface or the terminal by using the identifier. The identifier is activated in response to the activation operation command associated with the hiding region, instead of controlling the display of the identifier by using the "settings" menu, thereby simplifying an operation of the user.

In the above technical solution, preferably, the terminal further includes an icon creating unit 118 configured to create a prompt icon corresponding to the identifier. The display unit 102 is configured to display the prompt icon on the screen. The display unit 102 may redisplay the identifier on the screen when the command receiving unit 104 receives a preset operation command for the prompt icon. In the technical solution, after the identifier is hidden, the prompt icon may be displayed to guide a user to reactivate the identifier. In order to prevent the prompt icon from influencing the viewing of the user, preferably, the prompt icon has a less size than the identifier and is more transparency than the identifier. The prompt icon may be any graph preset by the manufacturer or specified by the user, for example an arrow and a word. The prompt icon may be a static picture or a dynamic picture. For example, the prompt icon is an arrow displayed in a blinking way, which has an area smaller than the identifier and is more transparency than the identifier.

In the above technical solution, preferably, the display unit 102 is further configured to display corresponding guidance information in the hiding region or a preset display region on the screen, in response to a preset operation command received by the command receiving unit 104. When the command receiving unit 104 receives an operation command input by the user based on the guidance information, the display unit 102 redisplays the identifier on the screen. In the technical solution, an operation of the user may be guided using the guidance information for example words and animations, and thereby invoking the identifier fast using the guidance information. Specifically, the guidance information may include multiple steps which are displayed step by step. When the user completes one step, the next step is displayed until all the steps are completed. For example, the guidance information includes two steps: "clicking" and "dragging".

In the above technical solution, preferably, the prompt icon is located in the hiding region or a preset region on the screen. In the technical solution, since the user hides the identifier by dragging the identifier to the hiding region, the prompt icon is displayed in the hiding region, and thus actions "hiding" and "redisplaying" associate with each other, thereby enhancing continuity of actions, and being convenient for the user to operate. Since the hiding region may relate to multiple borders of the screen and the user drags the identifier in a random direction when hiding the identifier, the prompt icon may be displayed at different positions every time the prompt icon is displayed, thereby resulting in a confusion of the display interface in a certain case. Therefore, a certain region may be preset on the screen to display the prompt icon, no matter where the identifier is dragged in the hiding region, thereby ensuring consistency of interface displaying. It should be noted that, the preset region may be located at a certain fixed position inside or outside the hiding region, and the number of the preset regions is not limited to one. In different displaying cases, for example in a vertical screen mode and a horizontal screen mode, different preset regions may be adopted, which may be set by the user or the dealer based on requirements.

In the above technical solution, preferably, the display unit 102 is configured to change a display position of the prompt icon on the screen in a real-time manner, in response to a click-and-drag operation instruction for the prompt icon which is received by the command receiving unit 104. In the technical solution, the prompt icon may be smaller and more transparent than the identifier, which may still interfere with the viewing of the user. Thus, the user may place the prompt icon at the most appropriate position on the screen by clicking and dragging the prompt icon directly, thereby being convenient for the user to use the terminal.

In the above technical solution, preferably, the terminal further includes: an icon position acquiring unit 120 configured to acquire a first icon display position of the prompt icon on the screen; and a second determining unit 122 configured to determine whether an operation key is provided at the first icon display position on the display interface, where the display unit 102 is configured to move the identifier to a second icon display position without the operation key, in the case that the operation key is provided at the first icon display position. In the technical solution, some operation keys are provided on the display interface, to manipulate the current display interface or the terminal. In addition, the prompt icon may be smaller than the identifier, but the prompt icon may be still overlapped "spatially" with the operation keys on the display interface. In this case, when the user clicks the region, the terminal 100 can not determine a real operation intension of the user, thereby resulting in a misoperation. Hence, it is convenient for the user to operate by changing a display position of the prompt icon automatically, thereby avoiding a misoperation.

Figure 2 shows a flowchart of a method for manipulating a terminal according to an embodiment of the present disclosure.

As shown in Figure 2, the method for manipulating a terminal according to the embodiment of the present disclosure includes step 202 and step 204. In step 202, at least one identifier is displayed on a screen of the terminal, where the identifier is floated on all display interfaces of the screen. In step 204, when the identifier is activated, a function menu region including at least one function key is displayed on the screen in the floating way, where the function key is configured to perform a corresponding operation function. In the technical solution, the identifier is displayed on any display interface on the screen of the terminal in the floating way. In this way, the user may manipulate the current display interface or the terminal by using the identifier in any case. The function key is provided in the function menu region. Thus, no matter which interface is displayed currently, some operation functions irrelevant to the interface (for example, shutdown, screen lock, and returning to a home page) can be achieved conveniently. No matter which interface is displayed currently, the operation function of any key in the current interface can be achieved conveniently by using the function key in the function menu region, and it is not necessary for the user to search for a position of the key on the interface. In the case that the key is arranged at a position difficult to be operated in the interface, for example on the top of the interface, the user does not need to click the key with an effort, thereby improving operation efficiency of the user, reducing operation difficulty of the user, and improving operation experience of the user.

In the above technical solution, preferably, the function key includes at least one fixed function key and/or at least one dynamic function key. The fixed function key is a system function key, and the dynamic function key is a key associated with a display interface where the identifier is located and/or a key with a use frequency higher than a preset frequency threshold. In the technical solution, the fixed function key is a system function key which may be operated no matter which interface is displayed currently and is irrelevant to the current interface, for example shutdown, screen lock, and returning to home page. The dynamic function key is a key relevant to the current interface, which may be a key displayed on the current interface originally. The dynamic function key is configured to achieve an operation function of a key on the interface. For example, if an interface of an application "message" is displayed currently, the dynamic function key may include a key of "inbox" corresponding to a function of "entering an inbox", a key of "draft" corresponding to a function of "entering a draft", and a key of "compose" corresponding to a function of "editing a new short message". The dynamic function key may also correspond to other applications or application functions, which are relevant to an application corresponding to the current interface. For example, if the interface of the application "message" is displayed currently, the dynamic function key may include a key of "address book" corresponding to a function of "opening an address book" and a key of "dial" corresponding to a function of "enabling a dial". The above implementing ways each are associated with the current interface. In fact, on some operation interfaces, a menu bar may include multi-level menu options, thereby resulting in a complicated operation when the user uses some common options. In this case, these menu options which may be located at a first-level menu, a second-level menu or other menus may be displayed in the function menu region as dynamic function keys. In addition, frequencies of all or some function keys on the interface may be recorded, and the key with the highest frequency is set as the dynamic function key. Specifically, a key with the highest frequency in one interface is set as the dynamic function key. In addition, a manufacturer or a user may add, delete or change the function keys in the function menu region based on an actual operation.

In the above technical solution, preferably, an association between at least one interface of the terminal and the dynamic function key is preset; and based on a display interface where the identifier is currently located, a function key relevant to the display interface is acquired, and the acquired function key is configured in the function menu region. In the technical solution, the association between the interface and the dynamic function key is preset, and thus the function keys in the function menu region may be changed dynamically based on the interface where the identifier is currently located. Therefore, the configuration of the function key conforms to an operation intension and an operation habit of the user more. In the case that multiple display interfaces are displayed on the screen in a split-screen way, based on one split-screen displayed interface where the identifier is currently located, a function key associated with the split-screen displayed interface is acquired, and the acquired function key is configured in the function menu region.

In the above technical solution, preferably, an association between at least one region in at least one interface and the dynamic function key is preset; and based on a display region of the display interface where the identifier is currently located, the function key associated with the display region is acquired, and the acquired function key is configured in the function menu region. In the technical solution, a respective interface may be divided in multiple regions. In this way, when the identifier is located at different regions of the same interface, function keys in the function menu region are different, which is thereby convenient for the user to operate.

In the above technical solution, preferably, the function menu region includes at least one page, and each of the at least one page includes at least one of the function keys. A different page is switched to be displayed in response to a received switching instruction. In the technical solution, the number of function keys may exceed the maximum number of function keys which can be displayed in the function menu region, hence these function keys may be respectively displayed in multiple pages. In this way, the user can achieve more operation functions by the identifier and the function menu region.

In the above technical solution, preferably, a fixed function key and/or a dynamic function key to be displayed in the function menu region is set in response to a received setting command. In the technical solution, the manufacture or the user may set the fixed function key and/or the dynamic function key in the function menu region based on actual cases or requirements, thereby conforming to the actual use requirement.

In the above technical solution, preferably, in a case that multiple display interfaces are displayed on the screen in a split-screen way, a corresponding identifier is displayed on each of the multiple display interfaces. When the identifier is activated, the dynamic function key included in the displayed function menu region is a key associated with a split-screen displayed interface where the identifier is currently located. In the technical solution, in the case of the multiple split-screen displayed interfaces, when two or more users performs operations simultaneously, the users have different operation requirements, and hence only one identifier is not enough. Hence, a distinct identifier may be provided for each screen interface. Particularly in the case of the terminal supporting multiple-touch, multiple users can operate multiple identifiers, thereby manipulating respective split-screen interfaces.

In the above technical solution, preferably, the displaying of the function menu region is stopped, in the case that the terminal receives a specified operation command specified of the user or does not receive any operation command within a predetermined time threshold. The specified operation includes at least one of selecting a specified function key in the function menu region, touching a region other than the function menu region on the screen, and triggering a first physical key on the terminal, or a combination thereof. In the technical solution, the function menu region is displayed on the screen of the terminal in the floating way, and thus a content displayed on the screen may be sheltered. Therefore, the user may stop displaying the function menu region in the above way, when the user does not need to operate the function menu region. If the identifier is hidden when the function menu region is displayed by activating the identifier, the identifier may be recovered to display when the displaying of the function menu region is stopped. If the identifier is displayed when the function menu region is displayed by activating the identifier, the function menu region may disappear and the identifier is displayed continuously when the displaying of the function menu region is stopped.

In the above technical solution, preferably, the identifier is a translucent icon. In the technical solution, the identifier is set to be translucent. Thus, the interfaces displayed on the screen are not sheltered by the identifier, in the case that the identifier is displayed on the screen in the floating way.

In the above technical solution, preferably, a first identifier display position of the identifier on the screen is acquired; and it is determined whether an operation key is located at the first identifier display position on the display interface; and the identifier is moved to a second identifier display position without an operation key, in the case that the operation key is located at the first identifier display position. In the technical solution, some operation keys may be located on the display interface to manipulate the current display interface or the terminal. Although the identifier may only occupy a small display area, the identifier may be still overlapped "spatially" with the operation keys on the display interface. Hence, when the user clicks the region, the terminal can not determine a real operation intension of the user, thereby resulting in a misoperation. Accordingly, it is convenient for the user to operate by automatically changing the display position of the identifier, thereby avoiding a misoperation.

In the above technical solution, preferably, a display position of the identifier on the screen is changed in a real-time manner in response to a received click-and-drag operation instruction for the identifier. In the technical solution, although the identifier may be small and translucent, which may still interfere with viewing the interface by the user, hence the user may place the identifier at the most appropriate position on the screen by clicking and dragging the identifier directly, thereby being convenient for the user to use the terminal.

In the above technical solution, preferably, a display property of the identifier is edited in response to a received property editing command. In the technical solution, the display property of the identifier includes a size, a shape, a color, an initial display position, the number and a transparency of the identifiers. One or more of these display properties are edited, to make the identifier to conform to a use habit of the user more.

In the above technical solution, preferably, the identifier is hidden, in the case that the identifier is clicked and dragged to a preset hiding region on the screen. In the technical solution, in the case that the user does not need to operate the identifier or the function menu region but needs to view the display interface of the terminal, for example the user sees a movie on the terminal, the identifier may shelter the current display page. Particularly, in the case that the screen of the terminal itself is not large, the identifier may interfere with the viewing of the user. Hence, the hiding region is preset on the screen, such that the user may hide the identifier conveniently, instead of setting identifier by using a "settings" menu.

In the above technical solution, preferably, the hiding region is located in a boundary region of the screen. In the technical solution, if a closed graph is provided on the screen, and an edge of the graph is not overlapped with at least one border of the screen. A region other than the closed graph on the screen is the boundary region of the screen. According to habits of the user, the user generally expects to move an undesired object away from a current concerned position. In the case that the user does not expect that the identifier shelters the display interface, the concerned position is the current display interface. Hence, the user is intended to move the identifier from a middle position of the display interface to a border position of the screen, which just likes an action "throwing the identifier outside the screen". Thus, the hiding region provided in the boundary region of the screen is convenient for the user to use.

In the above technical solution, preferably, after the identifier is hidden, the identifier is redisplayed on the screen, when the terminal receives an activation operation command associated with the hiding region. The activation operation command may be triggered by at least one of clicking the hiding region, clicking the hiding region and making a first preset gesture, making a preset gesture in the hiding region, and triggering a second physical key on the terminal, or a combination thereof. In the technical solution, once the user needs to use the identifier after the identifier is hidden, the identifier may be redisplayed fast in response to the activation operation command, thereby being convenient for the user to manipulate the current operation interface or the terminal by using the identifier. The identifier is activated in response to the activation operation command associated with the hiding region, instead of controlling the display of the identifier by using a "settings" menu, thereby simplifying the operation of the user.

In the above technical solution, preferably, after the identifier is hidden, a prompt icon corresponding to the identifier is created, the prompt icon is displayed on the screen; and the identifier is redisplayed on the screen when the terminal receives a preset operation instruction for the prompt icon. In the technical solution, after the identifier is hidden, the prompt icon may be displayed to guide the user to reactivate the identifier. In order to prevent the prompt icon from influencing the viewing of the user, preferably, the prompt icon has a less size than the identifier, and is more transparency than the identifier. The prompt icon may be any graph preset by the manufacturer or specified by the user, for example an arrow and a word. The prompt icon may be a static picture or a dynamic picture. For example, the prompt icon is an arrow displayed in a blinking way, which has an area smaller than the identifier and is more transparency than the identifier.

In the above technical solution, preferably, corresponding guidance information is displayed in the hiding region or a preset display region on the screen, when the terminal receives the preset operation command; and the identifier is redisplayed on the screen, when the terminal receives an operation command input by the user based on the guidance information. In the technical solution, an operation of the user may be guided using the guidance information, for example a word and an animation, thereby invoking the identifier fast using the guidance information. Specifically, the guidance information may include multiple steps which are displayed step by step. When the user completes one step, the next step is displayed until all the steps are completed. For example, the guidance information includes two steps: "clicking" and "dragging".

In the above technical solution, preferably, the prompt icon is located in the hiding region or a preset region on the screen. In the technical solution, since the user hides the identifier by dragging the identifier to the hiding region, the prompt icon is displayed in the hiding region, and thus actions "hiding" and "redisplaying" associate with each other, thereby enhancing continuity of actions, and being convenient for the user to operate. Since the hiding region may relate to multiple borders of the screen and the user drags the identifier in a random direction when hiding the identifier, the prompt icon may be displayed at different positions every time the prompt icon is displayed, thereby resulting in a confusion of the display interface in a certain case. Therefore, a certain region may be preset on the screen to display the prompt icon, no matter which hiding region the identifier is dragged in, thereby ensuring consistency of interface displaying. It should be noted that, the preset region may be located at a certain fixed position inside or outside the hiding region, and the number of the preset regions is not limited to one. In different displaying cases, for example in a vertical screen mode and a horizontal screen mode, different preset regions may be adopted, which may be set by the user or the dealer based on requirements.

In the above technical solution, preferably, a display position of the prompt icon on the screen is changed in a real-time manner in response to a received click-and-drag operation instruction for the prompt icon. In the technical solution, the prompt icon may be smaller and more transparent than the identifier, which may still interfere with the viewing of the user. Thus, the user places the prompt icon at the most appropriate position on the screen by clicking and dragging the prompt icon directly, thereby being convenient for user to use the terminal.

In the above technical solution, preferably, a first icon display position of the prompt icon on the screen is acquired; it is determined whether an operation key is provided at the first icon display position on the display interface of the screen; and the prompt icon is moved to a second icon display position without the operation key, in the case that the operation key is provided at the first icon display position. In the technical solution, some operation keys are provided at the display interface, to manipulate the current display interface or the terminal. In addition, the prompt icon is smaller than the identifier, but the prompt icon may be still overlapped "spatially" with the operation keys on the display interface. In this case, when the user clicks the region, the terminal can not determine a real operation intension of the user, thereby resulting in a misoperation. Hence, it is convenient for the user to operate by automatically changing a display position of the prompt icon, thereby avoiding a misoperation.

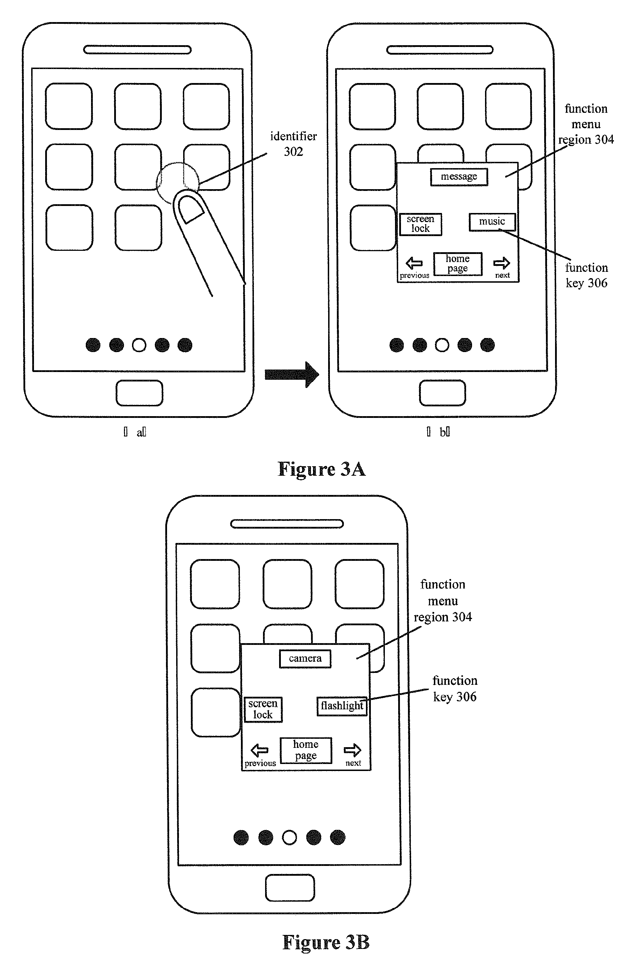

Figure 3A to Figure 3K show schematic diagrams of an interface for manipulating a terminal according to an embodiment of the present disclosure.

As shown in Figure 3A, in the present disclosure, an identifier 302 shown in Figure 3A(a) is provided on a screen of the terminal, and the identifier 302 is displayed on the screen in a floating way. Thus, no matter which interface is displayed currently, the identifier 302 can be displayed on the screen all the time and located "above" the display interface "spatially". For example, in Figure 3A(a), the identifier 302 is located "above" application icons in the home page interface. When a user activates the identifier 302, for example the identifier 302 is clicked, a corresponding function menu region 304 may be invoked, as shown in Figure 3A(b).

In Figure 3A(b), the function menu region 304 includes multiple function keys 306. Specifically, the function keys 306 are presented by virtual keys in a form of "words". The function keys 306 may include multiple types of keys: keys irrelevant to the current display interface on the screen, for example "home page" and "screen lock"; keys corresponding to an application relevant to the current display interface, for example "message" and "music" (since the currently display interface is the home page interface, each of the "message" and "music" keys may be configured to a start key for an application icon on the currently display interface).

Practically, the manufacturer or the user may determine which keys are to be configured in the function menu region 304 based on actual cases. In the case that the function keys 306 to be configured in the function menu region 304 are too much, the function keys 306 may be arranged in multiple pages, and pages are switched to display different pages by using "previous page" or "next page" (these two keys are also included in the function keys 306) in the function menu region 304, thereby searching for the function key 306 which the user really expects to use. For example, when the user clicks the "next page" in Figure 3A(b), an interface shown in Figure 3B may be displayed, and the function keys 306 "message" and "music" are changed into the function keys "camera" and "flashlight" in the function menu region 304.

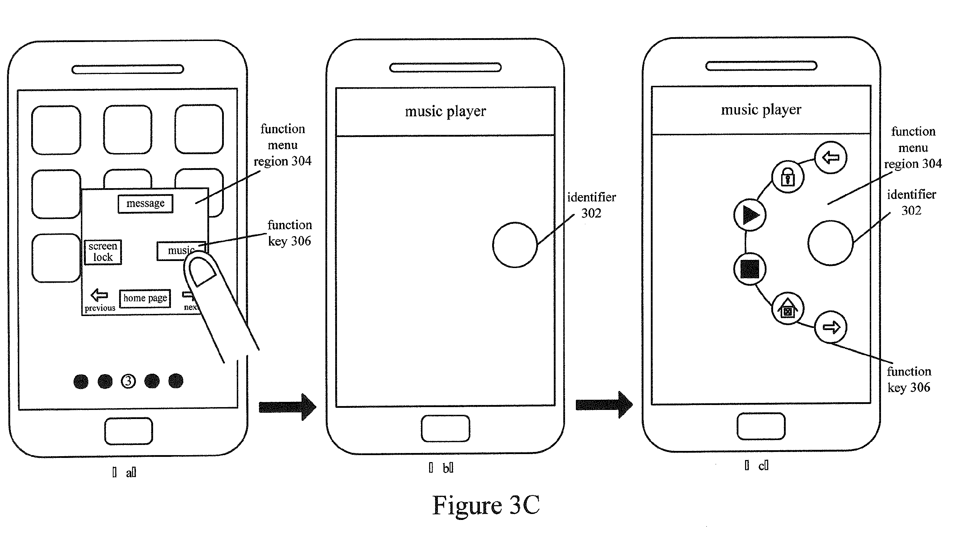

As shown in Figure 3C, when the user clicks the function key 306 corresponding to "music" in the function menu region 304 shown in Figure 3C(a), a display interface corresponding to "music" is displayed as shown in Figure 3C(b), the function menu region 304 shown in Figure 3C(a) disappears and the identifier 302 is recovered, as shown in Figure 3C(b). In this case, when the user reactivates the identifier 302, an interface shown in Figure 3C(c) is displayed, i.e., the function menu region 304 is redisplayed and the function keys 306 included in the function menu region 304. Referring to Figure 3C(c), in an aspect, as the display interfaces are switched (the home page interface in Figure 3C(a) is switched to a music playing interface in Figure 3C(c)), the function keys 306 in the function menu region 304 are changed correspondingly. In another aspect, forms of the function menu 304 or the function keys 306 are variable. For example, the function menu region 304 may be displayed, not only in the "rectangular" form shown in Figure 3C(b), but also in an "arc" form shown in Figure 3C(c) and the function keys 306 are uniformly arranged on the "arc". Figure 3C(c) differs from Figure 3C(b) in that the function keys 306 each are displayed in a form of "pattern", rather than "words" in Figure 3C(b), so as to achieve a better display effect.

In addition, in Figure 3C(c), the function keys 306 include: "previous page" and "next page" ( which are respectively arranged on the top and on the bottom, and indicated by corresponding patterns), "screen lock" ( a second key from the top), "returning to a home page" (a second key from the bottom), "play"(a third key from the top), and "stop" (a third key from the bottom). The keys "play" and "stop" exist on the display interface of the "music player" originally; and may be located at a position difficult to be operated for example on the bottom of the screen, due to the arrangement of the user interface itself. Hence, the function keys 306 which can implement the same operation functions are provided in the function menu region 304, thereby being easy to operate for the user and improving operation efficiency of the user.

Practically, in Figure 3C, once the user clicks a certain function key 306 shown in Figure 3C(a), the interface shown in Figure 3C(b) s displayed, i.e., the function menu region 304 disappears and the identifier 302 is recovered. In practice, the interface shown in Figure 3C(b) may be omitted. That is, once the user clicks a certain function key 306 in Figure 3C(a), a corresponding interface is directly switched to display, the function menu region 304 is stilled displayed on the screen, and the function keys 306 change as the interface changes.

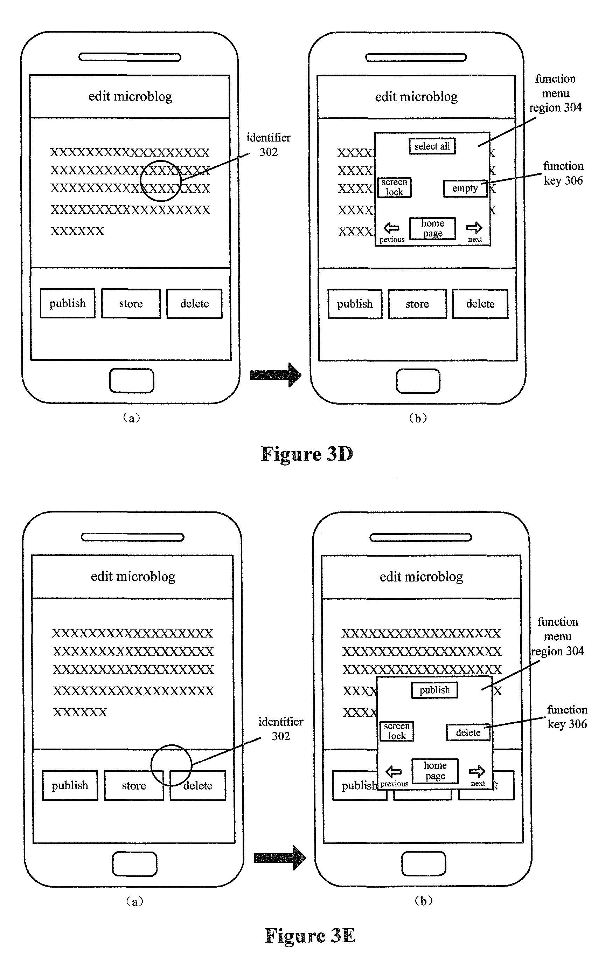

In addition to changing the function keys 306 configured in the function menu region 304 in different interfaces, different regions may also be provided in one interface. In this case, when the identifier 302 is located in different regions, a function key 306 corresponding to the respective region is configured in the function menu region 304. Specifically, the above case is shown in Figure 3D and Figure 3E.

In Figure 3D(a), the identifier 302 is located at a position where a microblog text to be edited by the user is displayed. When the user activates the identifier 302, the function menu region 304 shown in Figure 3D(b) is invoked, in which the function keys 306 include keys relevant to the microblog text to be edited currently, for example "select all" and "empty", (also including function keys 306 irrelevant to the interface, for example " screen lock " and "return to home page", which are not described herein). In Figure 3E(a), the identifier 302 is located at a position where operation keys are located in the interface. In this case, when the user activates the identifier 302, the function menu region 304 shown in Figure 3E(b) is displayed, and the function keys 306 include keys for operating the current microblog text, for example "publishing" and "deleting".

Practically, it should be noted that, "different regions" may be displayed at different positions. For example, in Figure 3D or Figure 3E, the edited microblog text is located on the upper part of the screen and keys for operating the text of the microblog are located on the lower part of the screen. Thus, based on a position where the identifier 302 is located on the screen, the function keys 306 is configured in a function menu region 304 corresponding to the position of the identifier. Alternatively, the function keys 306 may also be determined based on a displayed content at a current position of the identifier, for example, either the microblog text or the function key displayed at the current position of the identifier.

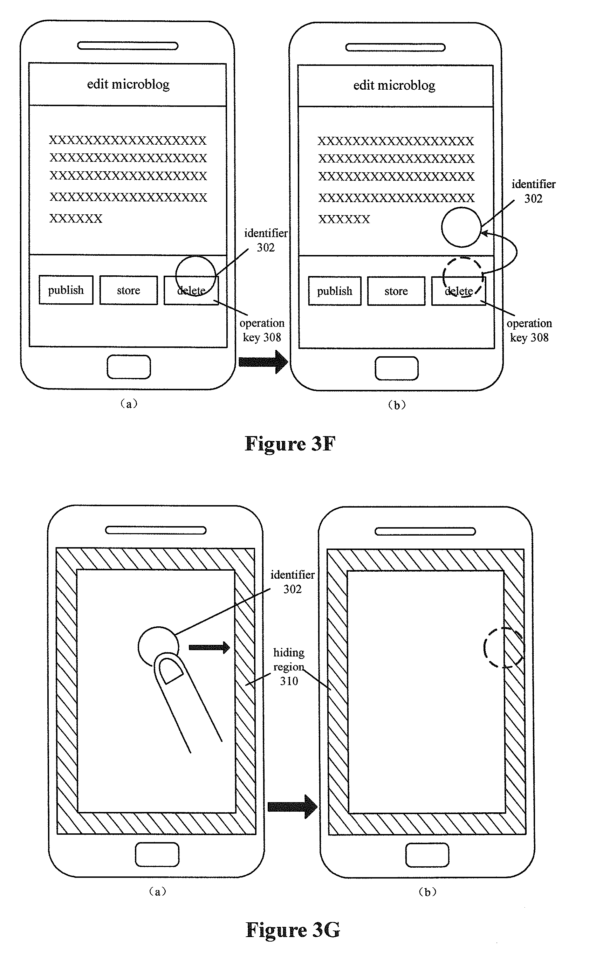

As shown in Figure 3F, when the user performs an operation on the terminal, generally one or more operation keys 308 are provided on an operation interface, to manipulate the operation interface. In addition, positions of the identifier 302 and the operation of the operation key 308 may be overlapped. In Figure 3F(a), the identifier 302 is overlapped with a key "deleting". Thus, when the user performs a click operation within the range, the terminal can not identify a true operation intension of the user, thereby resulting in a misoperation. In order to avoid the above case, in Figure 3F(b), the terminal automatically identifies an overlap between the identifier 302 and the operation key 308, and moves the identifier 302 to a position without the operation key 308 automatically, thereby being convenient to accurately operate the terminal for the user.

Although The identifier 302 according to the present disclosure may be convenient for the user to operate the terminal, a translucent identifier 302 may influence the viewing or operating of the user even when the user perform viewing or controlling on the screen of the terminal, for example editing a short message or seeing a movie. Hence, as shown in Figure 3G, a hiding region 310 is provided on the screen of the terminal according to the present disclosure. When the user drags the identifier 302 to the hiding region 310 as shown in Figure 3G(a), the identifier 302 will disappear on the screen as shown in Figure 3G(b), thereby being convenient to view or operate the interface for the user.

It should be noted that, the user may set a position of the hiding region 310 on the screen, based on an actual requirement. For example, preferably, the hiding region 310 may be arranged as a boundary region of the screen in the way shown in Figure 3G The boundary region means that if an closed graph is draw on the screen and an edge of the graph does not overlap with at least one border of the screen, a region other than the closed graph on the screen is the boundary region of the screen, for example a shaded portion in Figure 3G.

When the user expects to redisplay the hidden identifier 302, the user may operate the hiding region 310, for example clicking the hiding region 310 and sliding inwardly on the screen. Therefore, the identifier 302 is redisplayed on the screen, thereby hiding and activating the identifier 302.

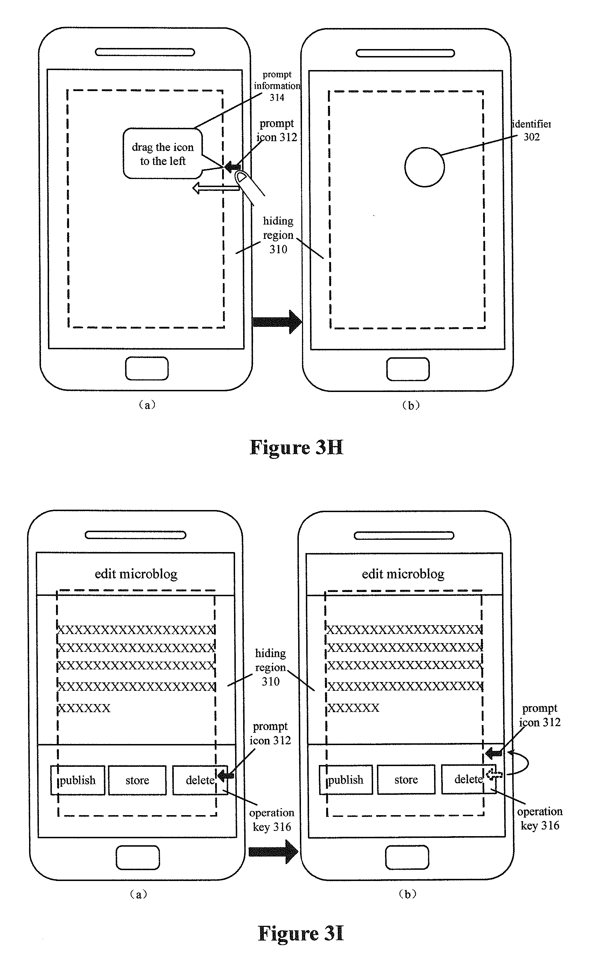

In order to further improve the use experience of the user, as shown in Figure 3H, after the user hides the identifier 302 by dragging the identifier 302 to the hiding region 310, a corresponding prompt icon 312 may be provided at the hiding region 310 as shown in Figure 3H(a). Specifically, the prompt icon 312 may be displayed as an arrow shown in Figure 3H(a) or other patterns desired by the user. The prompt icon 312 may be a static picture or a dynamic picture. The prompt icon 312 may be displayed by the following ways. In a case that the user hides the identifier 302 by moving the identifier from a center of the screen to the hiding region 310, the prompt icon 312 is arranged at a position where the identifier 302 is hidden. Alternatively, the prompt icon 312 may also be arranged at a certain fixed position, for example at a middle portion on the right side of the screen. In this case, no matter where the identifier 302 is moved to be hided, the prompt icon 312 is displayed at the fixed position.

In the case that the prompt icon 312 is displayed on the screen of the terminal, the user may click the prompt icon 312 and slide towards the center of the screen in the interface shown in Figure 3H(a), and then the identifier 302 is redisplayed on the screen as shown in Figure 3H(b).

In addition, in order to guide the user to operate the prompt icon 312, in the case that the user drags the identifier 302 to the hiding region 310 to hide the identifier, corresponding information may be displayed at a preset position on the screen, for example "XX button (i.e., the identifier 302) may be redisplayed by dragging the prompt icon 312". Specifically, the corresponding information may be displayed close to the prompt icon 312, close to the position where the identifier 302 is hidden (without the prompt icon 312) or at a status bar on the top of the screen. Once the user clicks the prompt icon 312 or the hiding region 310 (without the prompt icon 312), prompt information 314 may be displayed, for example "drag the icon to the left", as shown in Figure 3H(a), so as to guide the user to perform a next operation.

As shown in Figure 3I, when the user performs an operation on the terminal, generally one or more operation keys 316 are arranged on an operation interface for manipulating the operation interface. In addition, in the case that the user hides the identifier 302 shown in Figure 3A in the hiding region 310, the prompt icon 312 may be overlapped with the operation key 316 if a corresponding prompt icon 312 exists. For example, in Figure 3I(a), the prompt icon 312 and a key "deleting" are overlapped. When the user performs a click operation within the range, the terminal can not identify a true operation intension of the user, and thus a misoperation may be resulted in. In order to avoid the above case, as shown in Figure 3I(b), the terminal automatically identifies an overlap between the prompt icon 312 and the operation key 316, and moves the prompt icon 312 to a position without the operation key 316, thereby being convenient to accurately operate the terminal for the user.

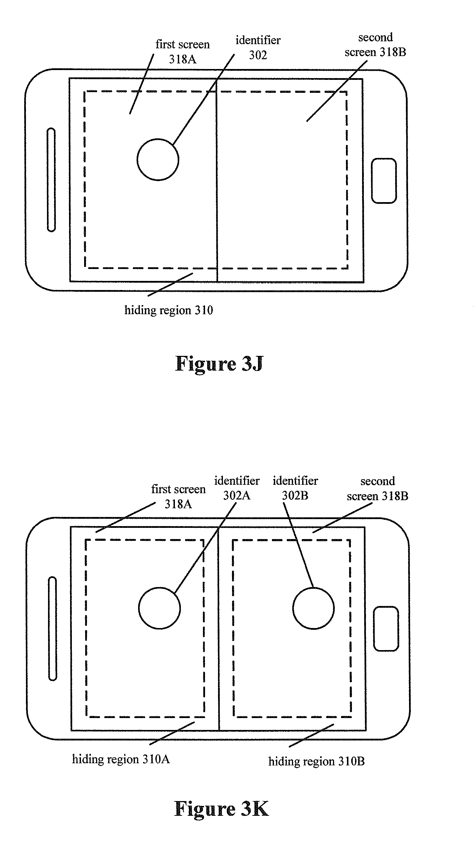

In Figure 3A to Figure 3I, one display interface and one identifier 302 exist on the screen of the terminal, and the display interface is operated using the identifier 302 or the identifier 302 is hidden or activated. As shown in Figure 3J and Figure 3K, in some cases, multiple interfaces may be displayed on the screen in a split-screen way, for example, two display interfaces including a first screen 318A and a second screen 318B are displayed.

In the case of the split-screen display shown in Figure 3J, only one identifier 302 may be displayed on the screen. When the identifier 302 is located at different split-screen displayed interfaces or different regions of a certain split-screen displayed interface, a functional menu region including corresponding function keys is displayed (not shown in Figures, the interface shown in Figure 3A(b) may correspond to a certain split-screen displayed interface). In addition, a corresponding hiding region (not shown in the Figure) may be provided for a respective split-screen displayed interface; or the hiding region 310, provided when the split-screen displaying is not performed, is still used. The way for hiding the identifier 302 in the hiding region 310 and then invoking the identifier 302 is similar to the way shown in Figure 3H and Figure 3I, which is not described herein.

In the case of the split-screen display shown in Figure 3K, a corresponding identifier is displayed on a respective split-screen displayed interface. For example, an identifier 302A is displayed on a first screen 318A and an identifier 302B is displayed on a second screen 318B. Each split-screen displayed interface and the corresponding identifier may be regarded as an independent interface, and the interface is operated in a way similar to that shown in Figure 3A to Figure 3I. In addition, a corresponding hiding region may exist on a respective split-screen displayed interface, for example a hiding region 310A on the first screen 318A and a hiding region 310B on the second screen 318B. The user may hide the identifier 302A by dragging the identifier 302A to the hiding region 310A, and redisplay the identifier 302A by clicking the hiding region 310A or a prompt icon similar to that in Figure 3I (not shown in Figures) and sliding towards a center of the screen. An operation for the identifier 302B is similar to that for the identifier 302A, which is not descried herein.

The technical solutions of the present disclosure are described in detail in conjunction with the drawings. In view of that in the related art, it is not beneficial to operate a terminal for the user, a terminal and a method for manipulating a terminal are provided according to the present disclosure, by which the user can manipulate the terminal flexibly without the limitation of the original key position on the terminal interface, thereby improving operation efficiency for the user and improving user experience.

The preferred embodiments of the present disclosure are described above, which are not intended to limit the present disclosure. For those skilled in the art, many alterations and changes can be made. Any changes, equivalent substitutions or improvements made within the spirit or principles of the present disclosure each should be included in the scope of protection of the present disclosure.

## Claims

1. A terminal, comprising:
a display unit configured to display at least one identifier on a screen of the terminal, wherein the identifier is floated on all display interfaces of the screen; and
a command receiving unit configured to receive an activation command for the identifier,
wherein the display unit is further configured to display a function menu region comprising at least one function key on the screen in a floating way in a case that the identifier is activated, and the functional key is configured to perform a corresponding operation function.

2. The terminal according to claim 1, wherein the function key comprises at least one fixed function key and/or at least one dynamic function key; and
wherein the fixed function key is a system function key, and the dynamic function key is a key associated with a display interface where the identifier is located and/or a key with a use frequency higher than a preset frequency threshold.

3. The terminal according to claim 2, further comprising:
a relation setting unit configured to preset an association between at least one interface of the terminal and/or at least one region in at least one interface of the terminal and the dynamic function key; and
a key configuration unit configured to acquire, based on a display interface where the identifier is currently located and/or a display region where the identifier is currently located in the display interface, a function key associated with the display interface and/or the display region, and configure the acquired function key in the function menu region.

4. The terminal according to claim 2, wherein the function menu region comprises at least one page, and each of the at least one page comprises at least one of the function keys; and
wherein the display unit is configured to switch between different pages to display one of the pages, in response to a switching instruction received by the command receiving unit.

5. The terminal according to claim 2, wherein the display unit is further configured to in a case that the plurality of display interfaces are displayed on the screen in a split-screen way, display a corresponding identifier on each of a plurality of split-screen displayed interfaces; and
wherein in a case that the identifier is activated, the dynamic function key comprised in the displayed function menu region is a key associated with the split-screen displayed interface where the identifier is currently located.

6. The terminal according to claim 1, wherein the display unit is further configured to stop displaying the function menu region, in a case that the command receiving unit receives a command for specified operation of a user or does not receive an operation command within a predetermined time threshold; and
wherein the specified operation comprises at least one of selecting a specified function key in the function menu region, touching a region other than the function menu region on the screen, and triggering a first physical key on the terminal, or a combination thereof.

7. The terminal according to claim 1, further comprising:
an identifier position acquiring unit configured to acquire a first identifier display position of the identifier on the screen; and
a first determining unit configured to determine whether an operation key is located at the first identifier display position on the display interface, wherein the display unit is configured to move the identifier to a second identifier display position without an operation key, in a case that the operation key is located at the first identifier display position.

8. The terminal according to claim 1, wherein the display unit is further configured to change a display position of the identifier on the screen in a real-time manner in response to a click-and-drag operation instruction for the identifier which is received by the command receiving unit.

9. The terminal according to any one of claims 1 to 8, wherein the display unit is further configured to hide the identifier, in a case that the identifier is clicked and dragged to a preset hiding region on the screen.

10. The terminal according to claim 9, wherein the display unit is further configured to redisplay the identifier on the screen in response to an activation operation command which is associated with the hiding region and received by the command receiving unit; and
wherein the activation operation command is triggered by at least one of clicking the hiding region, clicking the hiding region and making a first preset gesture, making a second preset gesture in the hiding region, and triggering a second physical key on the terminal, or a combination thereof.

11. The terminal according to claim 9, further comprising:
an icon creating unit configured to create a prompt icon corresponding to the identifier, wherein the display unit is configured to display the prompt icon on the screen,
wherein the display unit is configured to redisplay the identifier on the screen when the command receiving unit receives a preset operation command for the prompt icon.

12. The terminal according to claim 11, wherein the display unit is further configured to display corresponding guidance information in the hiding region or a preset display region on the screen, in response to a preset operation command received by the command receiving unit; and
the display unit is configured to redisplay the identifier on the screen when the command receiving unit receives an operation command input by the user based on the guidance information.

13. The terminal according to claim 11, wherein the prompt icon is located in the hiding region or a preset region on the screen.

14. The terminal according to claim 9, further comprising:
an icon position acquiring unit configured to acquire a first icon display position of the prompt icon on the screen; and
a second determining unit configured to determine whether an operation key is located at the first icon display position on the display interface, wherein the display unit is configured to move the identifier to a second icon display position without the operation key, in a case that the operation key is located at the first icon display position.

15. A method for manipulating a terminal, comprising:
displaying at least one identifier on a screen of the terminal, wherein the identifier is floated on all display interfaces of the screen; and
displaying a function menu region comprising at least one function key on the screen in a floating way in a case that the identifier is activated, wherein the function key is configured to perform a corresponding operation function.

16. The method according to claim 15, wherein the function key comprises at least one fixed function key and/or at least one dynamic function key; and
wherein the fixed function key is a system function key, and the dynamic function key is a key associated with a display interface where the identifier is located and/or a key with a use frequency higher than a preset frequency threshold.

17. The method according to claim 16, wherein an association between at least one interface of the terminal and/or at least one region in at least one interface of the terminal and the dynamic function key is preset; and
based on a display interface where the identifier is currently located and/or a display region where the identifier is currently located in the display interface, a function key associated with the display interface and/or the display region is acquired, and the acquired function key is configured in the function menu region.

18. The method according to claim 16, wherein the function menu region comprises at least one page, and each of the at least one page comprises at least one of the function keys; and
wherein different pages are switched to display one of the pages in response to a received switching instruction.

19. The method according to claim 16, further comprising:
in a case that the plurality of display interfaces are displayed on the screen in a split-screen way, displaying a corresponding identifier on each of a plurality of split-screen displayed interfaces,
wherein in a case that the identifier is activated, the dynamic function key comprised in the displayed function menu region is a key associated with the split-screen displayed interface where the identifier is currently located.

20. The method according to claim 15, further comprising:
stopping displaying the function menu region, in a case that the terminal receives a command for specified operation of a user or does not receive an operation command within a predetermined time threshold,
wherein the specified operation comprises at least one of selecting a specified function key in the function menu region, touching a region other than the function menu region on the screen, and triggering a first physical key on the terminal, or a combination thereof.

21. The method according to claim 15, further comprising:
acquiring a first identifier display position of the identifier on the screen; and
determining whether an operation key is located at the first identifier display position on the display interface; and moving the identifier to a second identifier display position without an operation key in a case that the operation key is located at the first identifier display position.

22. The method according to claim 15, further comprising:
changing a display position of the identifier on the screen in a real-time manner in response to a received click-and-drag operation instruction for the identifier.

23. The method according to any one of claims 15 to 22, further comprising:
hiding the identifier, in a case that the identifier is clicked and dragged to a preset hiding region on the screen.

24. The method according to claim 23, wherein after the hiding the identifier, the method further comprises:
redisplaying the identifier on the screen when the terminal receives an activation operation command associated with the hiding region,
wherein the activation operation command is triggered by at least one of clicking the hiding region, clicking the hiding region and making a first preset gesture, making a second preset gesture in the hiding region, and triggering a second physical key on the terminal, or a combination thereof.

25. The method according to claim 23, wherein after the hiding the identifier, the method further comprises:
creating a prompt icon corresponding to the identifier, and displaying the prompt icon on the screen; and
redisplaying the identifier on the screen when terminal receives a preset operation command for the prompt icon.

26. The method according to claim 25, further comprising:
displaying corresponding guidance information in the hiding region or a preset display region on the screen, when the terminal receives a preset operation command; and
redisplaying the identifier on the screen when the terminal receives an operation command input by the user based on the guidance information.

27. The method according to claim 25, wherein the prompt icon is located in the hiding region or a preset region on the screen.

28. The method according to claim 23, further comprising:
acquiring a first icon display position of the prompt icon on the screen; and
determining whether an operation key is located at the first icon display position on the display interface of the screen; and moving the prompt icon to a second icon display position without the operation key, in a case that the operation key is located at the first icon display position.
